(19) Europäisches Patentamt
European Patent Office
Office européen des brevets

(11) **EP 3 545 610 B1**

(12) **EUROPÄISCHE PATENTSCHRIFT**

(45) Veröffentlichungstag und Bekanntmachung des Hinweises auf die Patenterteilung:
**01.04.2020  Patentblatt 2020/14**

(21) Anmeldenummer: **17801457.7**

(22) Anmeldetag: **21.11.2017**

(51) Int Cl.:
**H02K 21/14** *(2006.01)*　　　**H02K 21/24** *(2006.01)*
**H02K 1/27** *(2006.01)*

(86) Internationale Anmeldenummer:
**PCT/EP2017/079904**

(87) Internationale Veröffentlichungsnummer:
**WO 2018/095903 (31.05.2018 Gazette 2018/22)**

(54) **SYNCHRON-MASCHINE MIT MAGNETISCHER DREHFELDUNTERSETZUNG UND FLUSSKONZENTRATION**

SYNCHRONOUS MACHINE HAVING MAGNETIC ROTARY FIELD REDUCTION AND FLUX CONCENTRATION

MACHINE SYNCHRONE À DÉMULTIPLICATION MAGNÉTIQUE DE CHAMP TOURNANT ET CONCENTRATION DE FLUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2016  DE 102016122794**

(43) Veröffentlichungstag der Anmeldung:
**02.10.2019  Patentblatt 2019/40**

(73) Patentinhaber: **EMF 97 Elektro-Maschinen-Vertrieb-Magnettechnik- Und Forschungs GmbH 67547 Worms (DE)**

(72) Erfinder:
• **LINDNER, Jürgen 67550 Worms (DE)**
• **PROKOPP, Michael 67549 Worms (DE)**
• **HAMES, Thomas 67549 Worms (DE)**
• **KAYAKIRAN, Hasan Basri 34744 Istanbul Bostanci (TR)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
DE-A1- 4 115 887　　　US-A1- 2005 099 082
US-A1- 2010 019 606　　US-A1- 2010 176 679

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Synchron-Maschine mit Flusskonzentration

- mit mindestens einem Stator mit einer mehrphasigen, vorzugsweise dreiphasigen Wicklung mit einer Polzahl $2p \geq 4$, wobei die Polzahl das Zweifache der Polpaarzahl p ist und die Wicklung in n Nuten im Stator angeordnet und zur Erzeugung eines magnetischen Drehfeldes ausgebildet ist,
- mit zwischen den Nuten des mindestens einen Stators vorgesehenen Flussführungsbereichen zur Führung des magnetischen Drehfeldes, welche ein ferromagnetisches, vorzugsweise weichmagnetisches Material aufweisen,
- mit mindestens einem auf einer Drehachse angeordneten Rotor, welcher einen Luftspalt bildend relativ zu mindestens einem Stator drehbar angeordnet ist und Bereiche mit Permanentmagneten aufweist, die mindestens einem Stator zugewandt und in Bezug auf die Drehrichtung des Rotors gleichmäßig in Winkelbereichen in Umfangsrichtung verteilt angeordnet sind,
- wobei die Permanentmagnete in Richtung der Flussführungsbereiche des mindestens einen Stators oder in entgegengesetzter Richtung dazu magnetisiert sind,
- der mindestens eine Rotor zwischen den Permanentmagneten angeordnete Flussführungsbereiche aufweist, welche zur Führung des magnetischen Flusses aus dem oder in den mindestens einen Rotor dienen,
- wobei die Flussführungsbereiche des mindestens einen Rotors ein ferromagnetisches, vorzugsweise weichmagnetisches Material aufweisen.

Gattungsgemäße permanent erregte Synchron-Maschinen sind aus dem Stand der Technik bekannt. Sie werden üblicherweise für kleine bis mittlere Leistungsanforderungen verwendet und können als Generator zur Stromerzeugung und als Synchronmotor betrieben werden. Allerdings werden auch höhere Leistungen zunehmend realisiert. Beispielsweise werden Windenergieanlagen zum Teil mit permanent erregten Synchron-Maschinen ausgestattet. Permanent erregte Synchron-Maschinen weisen einen Rotor auf, welcher in Richtung der Flussführungsbereiche des Stators oder entgegengesetzt magnetisierte Permanentmagnete aufweist. Erzeugt die Wicklung des Stators ein magnetisches Feld, werden die Pole der Permanentmagnete entsprechend zu den Polen des Drehfeldes gezogen, so dass sich immer ungleichnamige magnetische Pole gegenüberstehen. Das Drehmoment der Synchron-Maschine wird also dadurch erzeugt, dass die magnetischen Pole eines drehbar gelagerten, permanent erregten Rotors einem im Stator erzeugten magnetischen Drehfeldes folgen.

Aus der US 2010/019606 A1 ist ein Elektromotor mit einem Stator und einem drehbar angeordneten Rotor mit in axialer Richtung voneinander beabstandeten Rotorkernen bekannt, wobei auf den Rotorkernen jeweils abwechselnd Rotorzähne und radial magnetisierte Permanentmagneten angeordnet sind.

Die Druckschrift US 2005/099082 A1 betrifft einen Wechselstrom-Synchronmotor, der einen Rotor mit einer Vielzahl von umlaufend angeordneten Permanentmagneten sowie einen Stator mit einer Vielzahl an Statorpolen umfasst.

Die Druckschrift DE 4115 887 A1 offenbart eine elektrische Maschine mit einem Ständer und einem permanentmagnetbestückten Läufer, wobei der magnetische Fluss mit Hilfe einer Steuerspule verändert und damit eine entsprechende Steuerung bzw. Regelung für unterschiedliche Belastungen und/oder Betriebsdrehzahlen vorgenommen werden kann.

Aus dem Dokument US 2010/176679 A1 ist ein Elektromotor mit einem Rotor, einem Erregerteil und einem Anker, der Ankerwindungen aufweist, die umlaufend einem Rotor zugewandt angeordnet sind und der Steuerung des magnetischen Flusses dienen, bekannt.

Das Drehmoment ist üblicherweise von dem Phasenwinkel zwischen Rotor und magnetischem Drehfeld abhängig, wobei der Maximalwert selbst von der maximalen Magnetisierbarkeit der Permanentmagneten abhängig ist. Bei Verwendung von beispielsweise Neodym-Permanentmagneten liegt die maximale magnetische Flussdichte in dem für Elektromotoren üblichen Temperaturbereich bis maximal 150 °C bei etwa 1,4 T, die Permanentmagnete bereitstellen können. Die Bereitstellung von Drehmomenten war bei gleichbleibender Baugröße bisher aufgrund der maximalen, von den Permanentmagneten bereitgestellten Flussdichten begrenzt. Allerdings besteht ein ständiges Bedürfnis das erzielbare/nutzbare Drehmoment der Synchron-Maschine zu steigern, um die Bauformen beispielsweise verringern zu können, Kosten zu reduzieren oder ganz neue Anwendungen aufgrund höherer Drehmomente zu ermöglichen.

Die vorliegende Erfindung hat sich daher die Aufgabe gestellt, eine permanent erregte Synchron-Maschine mit Flusskonzentration zur Verfügung zu stellen, welche verbesserte Eigenschaften in Bezug auf die Bereitstellung von Drehmomenten bei einfachem Aufbau bereitstellen kann.

Die aufgezeigte Aufgabe wird nach der Lehre der vorliegenden Erfindung für eine gattungsgemäße Synchron-Maschine nach Anspruch 1 dadurch gelöst, dass mindestens ein zusätzlicher Permanentmagnet vorgesehen ist, dessen erzeugter magnetischer Fluss zumindest teilweise über die Flussführungsbereiche des Rotors geführt wird, wobei der magnetische Fluss des zusätzlichen Permanentmagneten in den Flussführungsbereichen des Rotors eine zur Magnetisierungsrichtung der Permanentmagnete des Rotors entgegengesetzten Richtung aufweist.

Mit dem zusätzlich vorgesehenen mindestens einen Permanentmagneten wird ein zusätzlicher magnetischer Fluss in den Flussführungsbereichen des Rotors erzeugt, welcher der Magnetisierungsrichtung der Permanentmagneten entgegen gerichtet ist. In den Flussführungsbereichen des Rotors, welche den von den Permanentmagneten erzeugten magnetischen Fluss bereits aus dem Rotor rückführen, wird hierdurch die Flussdichte zusätzlich erhöht. Gleichzeitig sorgt der magnetische Fluss der Permanentmagnete dafür, dass der aus den Flussführungsbereichen austretende magnetische Fluss verdrängt und auf die Bereiche der Flussführungsbereiche des Rotors konzentriert wird, also eine Flusskonzentration bewirkt wird. Durch die zusätzlich bereitgestellte Flussdichte des mindestens einen Permanentmagneten kann in den Flussführungsbereichen des Rotors eine Flussdichte erreicht werden, die deutlich oberhalb der Remanenz der Bereiche mit Permanentmagneten von etwa 1,4 T liegt. Insgesamt ergibt sich daher eine höhere Gesamtmagnetisierung des Rotors, so dass das Drehmoment bei ansonsten gleicher Bauform deutlich gesteigert werden kann.

Die Anzahl der magnetischen Pole des magnetischen Drehfeldes $2p_2$ entspricht dem Zweifachen der Nutzahl n und für die Polzahl der magnetischen Pole des Rotors $2p_3$ gilt: $2p_3 = 2p_2 - 2p$. Durch Wahl einer entsprechenden Anzahl an magnetischen Polen des Rotors, beispielsweise $2p_3 = 44$ bei Wicklung mit einer Polzahl 2p von 4, kann eine Synchron-Maschine mit hoher magnetischer Drehfelduntersetzung und hohem Drehmoment bereitgestellt werden. Beispielsweise wird bei dem genannten Beispiel eine Untersetzung um Faktor 11 erreicht und gleichzeitig sehr hohe *Drehmomente* zur Verfügung gestellt. Dies kann die erfindungsgemäße Flussdichtenerhöhung besonders effizient zur Drehmomentsteigerung nutzen.

Der zusätzliche, mindestens eine Permanentmagnet kann beispielsweise im Rotor, im Stator oder auch im Gehäuse der Synchron-Maschine angeordnet sein, entscheidend ist lediglich, dass die Magnetisierung und die Flussführung des zusätzlichen Permanentmagneten einen zusätzlichen Fluss in den Flussführungsbereichen des Rotors entgegengesetzt zur Magnetisierungsrichtung der im Rotor vorgesehenen Permanentmagneten erzeugt.

Vorzugsweise ist die Wicklung des mindestens einen Stators als Drehstromwicklung ausgebildet und weist insofern genau drei Phasen auf. Hierdurch ist es möglich, die Synchron-Maschine auf einfache Art und Weise mit Drehstrom zu betreiben. Allerdings ist auch ohne weiteres möglich, die Synchron-Maschine auch bei einer Drehstromwicklung mit variabler Frequenz über einen Wechselrichter zu betreiben.

Um eine gute Magnetisierung mit möglichst geringen Verlusten zu erreichen, sind die Flussführungsbereiche im Stator und/oder Rotor geblecht ausgebildet. Geblecht ausgebildet bedeutet, dass die den magnetischen Fluss führenden Bereiche durch einzelne voneinander elektrisch isolierte Bleche bereitgestellt werden und beispielsweise aus Elektroblech bestehen. Elektroblech ist die Bezeichnung für einen Stahl, der besonders gute weichmagnetische Eigenschaften aufweist. Die Flussführungsbereiche der vorliegenden Erfindung werden bevorzugt aus Elektroblech bereitgestellt.

Beispielsweise können für die geblechten Bereiche Eisen-Silizium-Legierungen mit bis zu 3 % Silizium verwendet werden, welche eine besonders hohe Magnetisierung im Sättigungsbereich ermöglichen und gleichzeitig eine sehr geringe Koerzitivfeldstärke zur Umpolung benötigen. Durch die Verwendung dieser Materialien im Rotor und/oder Stator der Synchron-Maschine können die magnetischen Verluste verringert werden.

Vorzugsweise beträgt die Lochzahl q der Wicklung des Stators mindestens 1,5. Die Lochzahl q ist definiert durch:

$$q = \frac{n}{2p * m},$$

wobei n die Nutenanzahl, 2p die Polzahl der Wicklung und m die Anzahl der Stränge bzw. Phasen der Wicklung ist. Je größer die Lochzahl q desto besser ist das Verhalten der Synchron-Maschine in Bezug auf Welligkeiten des Drehmomentes bei einer Umdrehung des Motors. Allerdings sind Lochzahlen von mehr als 4 in der Produktion schwierig zu realisieren. Lochzahlen von 3 und 4 stellen insofern einen Kompromiss in Richtung eines möglichst wenig schwankenden Drehmoments des Motors dar. Ein fertigungstechnisches Optimum mit gleichzeitig moderater Drehmomentglättung wird bei q = 2 erreicht.

Die erfindungsgemäße Synchron-Maschine kann beispielsweise mit einem Rotor in Form eines zylindrischen Läufers oder mit einem Rotor in Form eines Scheibenläufers mit dazu entsprechend angepassten Statoren ausgebildet sein. Zunächst werden im Weiteren die Varianten mit zylindrischem Läufer näher erläutert.

Gemäß einer weiteren Ausgestaltung der erfindungsgemäßen Synchron-Maschine ist der mindestens eine Rotor als eine Drehachse aufweisender zylindrischer Läufer und der mindestens eine Stator zur Erzeugung eines radial gerichteten magnetischen Drehfeldes im mindestens einen Rotor ausgebildet, wobei der mindestens eine Rotor in einem ersten Axialbereich Permanentmagnete aufweist, welche in vorbestimmten Winkelbereichen auf der Mantelfläche des mindestens einen Rotors vorgesehen sind und sich in axiale Richtung des mindestens einen Rotors erstrecken, wobei die Permanentmagnete des mindestens einen Rotors in Radialrichtung oder entgegengesetzt dazu magnetisiert sind und zwischen den Permanentmagneten des mindestens einen Rotors jeweils Flussführungsbereiche vorgesehen sind, welche in Radialrichtung einen Luftspalt zu den Flussführungsbereichen des mindestens einen Stators bilden. Dieser Aufbau der Synchron-Maschine erlaubt es, auf besonders einfache Art und Weise zusätzliche Permanentmagnete vorzusehen, welche im Rotor angeordnet sind und zur Erhöhung der Flussdichte in den Flussführungsbereichen dienen. Es hat sich herausgestellt, dass bei dieser Variante der Synchron-Maschine ein verbessertes Verhalten dadurch erreicht werden kann, dass die Breite der in Axialrichtung verlaufenden Permanentmagneten etwa das Doppelte der Dicke der Permanentmagneten aufweist.

Vorzugsweise sind die Flussführungsbereiche in dieser Ausgestaltung senkrecht zur Drehachse des Rotors geblecht ausgeführt.

Gemäß einer weiteren Ausgestaltung der erfindungsgemäßen Synchron-Maschine sind im Stator verteilte Winkelbereiche mit Permanentmagneten vorgesehen, welche in Richtung des Rotors oder entgegengesetzt dazu magnetisiert sind und benachbart zu Flussführungsbereichen des Stators angeordnet sind. Durch diese benachbart zu den Flussführungsbereichen des Stators vorgesehenen Permanentmagnete wird eine weitere magnetische Flusskonzentration des magnetischen Drehfeldes auf die Flussführungsbereiche erreicht und der Streufluss verringert. Dies trägt zur Erhöhung des Drehmomentes der Synchron-Maschine bei.

Die zuvor ausgeführte Ausführungsform kann dadurch weiter verbessert werden, dass der mindestens eine Rotor mindestens zwei Axialbereiche aufweist, wobei in mindestens einem ersten Axialbereich sich in axialer Richtung erstreckende und in radialer Richtung oder entgegengesetzt dazu magnetisierte Permanentmagnete in vorbestimmten Winkelbereichen in Umfangsrichtung und zwischen den Permanentmagneten jeweils Flussführungsbereiche vorgesehen sind, wobei in mindestens einem zweiten Axialbereich sich in axialer Richtung erstreckende und in radialer Richtung oder entgegengesetzt dazu magnetisierte Permanentmagnete in vorbestimmten Winkelbereichen in Umfangsrichtung und zwischen den Permanentmagneten jeweils Flussführungsbereiche vorgesehen sind, wobei die Magnetisierungsrichtung der Permanentmagnete entgegengesetzt zu der Magnetisierungsrichtung der im ersten Axialbereich angeordneten Permanentmagneten ist und die Permanentmagnete des mindestens einen zweiten Axialbereichs in Winkelbereichen in Umfangsrichtung angeordnet sind, in welchen im ersten Axialbereich Flussführungsbereiche vorgesehen sind, wobei die Flussführungsbereiche der Axialbereiche des mindestens einen Rotors zum mindestens einen Stator einen Luftspalt bilden.

Durch die Verwendung einer Mehrzahl an Axialbereichen im Rotor, wird erreicht, dass in den beiden Axialbereichen zusätzlicher magnetischer Fluss über einen beispielsweise im Rotor angeordneten Permanentmagneten genutzt werden kann. Mit dieser Ausgestaltung kann gleichzeitig der Gleichlauf und das Drehmoment der erfindungsgemäßen Synchron-Maschine verbessert werden. Bevorzugt sind nämlich hierzu die Winkelbereiche mit Permanentmagneten des ersten und zweiten Axialbereichs um jeweils genau den Winkelbereich der Flussführungsbereiche gegeneinander verdreht angeordnet, um einen optimalen Gleichlauf sowie ein maximales Drehmoment zu erreichen.

Eine weitere Verbesserung der zuletzt beschriebenen beiden Ausführungsvarianten kann dadurch erreicht werden, dass in mindestens einem weiteren Axialbereich, welcher sich dem ersten oder zweiten Axialbereich in axialer Richtung unmittelbar anschließt und/oder zwischen dem ersten und zweiten Axialbereich angeordnet ist, mindestens ein zusätzlicher Permanentmagnet vorgesehen ist, welcher in axialer Richtung magnetisiert ist, so dass in den Flussführungsbereichen des ersten oder zweiten Axialbereichs ein magnetischer Fluss entgegengesetzt zur Magnetisierungsrichtung der Permanentmagnete erzeugt wird, wobei die Drehachse aus nicht-ferromagnetischem Material ausgebildet ist und der mindestens eine weitere Axialbereich optional scheibenförmig ausgebildet ist. Hierdurch wird erreicht, dass zusätzlicher magnetischer Fluss auf einfache Weise über die Flussführungsbereiche der jeweiligen Axialbereiche des Rotors geführt werden kann und zur Erhöhung der Flussdichte auf bis zu 2,4 T in den Flussführungsbereichen beitragen kann. Durch die aus nicht ferromagnetischem Material ausgebildete Drehachse, beispielsweise bestehend aus nicht magnetisierbarem Edelstahl, wird die Führung des magnetischen Flusses über die Flussführungsbereiche der Axialbereiche des Rotors verbessert, da ein Kurzschließen der Flusslinien des Permanentmagneten über die Drehachse weitgehend unterdrückt wird. Die Anordnung des scheibenförmigen und in Axialrichtung magnetisierten Permanentmagneten zwischen zwei entsprechend, wie oben ausgeführt, ausgebildeten Axialbereichen des Rotors ermöglicht eine deutliche Reduzierung von Streufluss und die Nutzung des erzeugten magnetischen Flusses des scheibenförmigen Permanentmagneten zur Steigerung der Flussdichte in den Flussführungsbereichen des ersten und des zweiten Axialbereichs des Rotors. Bevorzugt ist der mindestens eine zusätzliche Permanentmagnet ein Seltenerd-Permanentmagnet, beispielsweise ein Neodym aufweisender Permanentmagnet.

Vorzugsweise entspricht die Fläche des mindestens einen scheibenförmigen Permanentmagneten der Fläche der Austritts-/Eintrittsfläche der Flussführungsbereiche des benachbarten ersten oder zweiten Axialbereichs, so dass nahezu eine Verdoppelung der Magnetisierung der Flussführungsbereiche auf bis zu 2,4 T erreicht wird. Daneben beträgt die Dicke des scheibenförmigen Permanentmagneten bevorzugt das 10- bis 30-Fache des Luftspaltes zwischen Rotor und Stator, vorzugsweise das 20-Fache des Luftspaltes. Dies wirkt sich positiv auf die Verringerung von Streufluss aus.

Gemäß einer weiteren alternativen Ausgestaltung der erfindungsgemäßen Synchron-Maschine mit zylindrischem Rotor ist in mindestens einem ersten oder/und zweiten Axialbereich des Rotors ein Permanentmagnet vorgesehen, welcher als in radialer Richtung magnetisierte, zylindrische Hülse oder Rohr ausgebildet ist, wobei der hülsen- oder rohrförmige Permanentmagnet einen geringeren Radius als der Rotor selbst aufweist und entgegengesetzt radial zur Magnetisierungsrichtung der auf der Mantelfläche des Rotors angeordneten Permanentmagneten magnetisiert ist, wobei optional die Drehachse des Rotors ferromagnetisches Material aufweist. Analog zur zuvor beschriebenen Ausführungsform wird bei dieser alternativen Ausführungsform zusätzlicher magnetischer Fluss durch die in Radialrichtung magnetisierten, hülsenförmigen bzw. rohrförmigen Permanentmagneten erzeugt, welcher in den Flussführungsbereichen des Rotors eine Erhöhung der Flussdichte bewirkt. Sind die hülsenförmigen oder rohrförmigen Permanentmagnete unmittelbar auf der Drehachse angeordnet, so muss die Drehachse aus ferromagnetischem Material ausgebildet sein, um eine Flussrückführung zu ermöglichen. Es ist aber auch denkbar, die hülsen- oder rohrförmigen Permanentmagnete unter Verwendung einer ferromagnetischen Hülse auf einer Drehachse aus nicht-ferromagnetischem Material anzuordnen.

Bevorzugt weist die Mantelfläche des hülsen- oder rohrförmigen Permanentmagneten auf der nach außen gerichteten Seite eine zur Fläche der Flussführungsbereiche des Axialabschnitts im Wesentlichen identisch große Oberfläche auf. Die Dicke der rohrförmigen bzw. hülsenförmigen Permanentmagnete entspricht vorzugsweise etwa dem 10-30-Fachen, bevorzugt dem 20-Fachen des Luftspalts zwischen Rotor und Stator, also dem Abstand der Flussführungsbereiche des jeweiligen Stators und des jeweiligen Rotors, um den Streufluss zu verringern.

Die Ausführungsform kann gemäß einer weiteren Ausgestaltung dadurch verbessert werden, dass die jeweiligen Axialbereiche des mindestens einen Rotors durch einen Spalt der Breite d in axialer Richtung voneinander getrennt angeordnet sind. Die Breite d des Spalts beträgt vorzugsweise das 10- bis 30-Fache des Luftspalts zwischen dem jeweiligen Rotor und Stator, vorzugsweise das 20-Fache des Luftspalts. Diese Maßnahme dient zur Reduzierung des Streuflusses aus dem Axialbereich in den innenliegenden Permanentmagneten.

Im Weiteren wird die Ausführungsform mit mindestens einem Rotor als Scheibenläufer beschrieben.

Diese vorteilhafte Ausgestaltung der Synchron-Maschine wird dadurch erreicht, dass der mindestens eine Rotor als Scheibenläufer ausgebildet ist und eine Mehrzahl an Winkelbereichen aufweist, in welchen Permanentmagnete vorgesehen sind, wobei die Permanentmagnete in axialer Richtung magnetisiert sind und sich in radialer Richtung auf der Rotorscheibe erstrecken, die Wicklung des mindestens einen Stators eine Wicklungsflächennormale aufweist, welche in axiale Richtung weist, sodass der mindestens eine Stator ein magnetisches Drehfeld mit in Axialrichtung weisenden Polen erzeugt und mindestens ein zusätzlicher Permanentmagnet vorgesehen ist, welcher in axialer Richtung magnetisiert ist und magnetischen Fluss im Bereich des Scheibenläufers bereitstellt, wobei die Drehachse und ein in Axialrichtung sich erstreckender Gehäusemantel des Synchron-Maschine aus nicht-ferromagnetischem Material ausgebildet sind und der mindestens eine Scheibenläufer und mindestens eine Stator zwischen zwei sich in Radialrichtung erstreckende Flussführungsplatten angeordnet sind, welche zur Flussführung des magnetischen Flusses des zusätzlichen Permanentmagneten vorgesehen sind.

Scheibenläufer können besonders kompakt ausgestaltet werden und weisen damit eine vorteilhafte Bauform auf. Durch die Anordnung von Permanentmagneten, welche sich in radialer Richtung auf der Rotorscheibe erstrecken, können auf dem Scheibenläufer hohe Dichten an magnetisch aktivem Material erreicht werden. Durch den zusätzlich vorgesehenen Permanentmagneten, wird in den Flussführungsbereichen, analog zu den bisherigen Ausführungsformen, ein zusätzlicher magnetischer Fluss erzeugt, welcher entgegengesetzt zur Magnetisierungsrichtung der Permanentmagnete gerichtet ist. Dabei leiten die den mindestens einen Scheibenläufer und den mindestens einen Stator einschließenden Flussführungsplatten den vom zusätzlichen Permanentmagnet erzeugten magnetischen Fluss sehr effektiv in die Radialebenen des Scheibenläufers ein und führen zu einer deutlichen Erhöhung der Flussdichte in den Flussführungsbereichen des Scheibenläufers bis an die Sättigungsgrenze des verwendeten Materials. Hierdurch wird eine deutliche Steigerung des Drehmoments erzielt. Dadurch, dass die Drehachse und ein in axialer Richtung sich erstreckender Gehäusemantel der Synchron-Maschine aus nicht ferromagnetischem Material ausgebildet sind, wird erreicht, dass in Bezug auf die Flussführung in der Synchron-Maschine mit Scheibenläufer keine Flussrückführung über das Gehäuse oder etwa über die Drehachse erfolgt und nahezu der gesamte magnetische Fluss des zusätzlichen Permanentmagneten die Radialflächen der oder des Scheibenläufer/s durchdringt. Um das magnetische Feld des zusätzlichen Permanentmagneten auszunutzen wird dieses über Flussführungsplatten, zwischen welchen der mindestens eine Scheibenläufer und der mindestens eine Stator angeordnet sind, in die Radialebene der Scheibenläufer eingekoppelt. Vorzugsweise sind die Flussführungsplatten so ausgebildet, dass das zusätzliche Magnetfeld des zusätzlichen Permanentmagneten nach außen hin nahezu vollständig abgeschirmt ist. Dies kann beispielsweise dadurch erreicht werden, dass die Flussführungsplatten Schnittflächen senkrecht zur Drehachse aufweisen, welche die Schnittflächen des Permanentmagneten überdecken. Bevorzugt schließen sich die Flussführungsplatten unmittelbar an den zusätzlichen Permanentmagneten an.

Gemäß einer weiteren Ausgestaltung sind vorzugsweise auf mindestens einem Scheibenläufer jeweils in entgegengesetzte Axialrichtungen weisende Permanentmagneten vorgesehen, wobei die Magnetisierungsrichtung der Permanentmagnete identisch ist und die Permanentmagnete auf dem Scheibenläufer in sich in Axialrichtung jeweils gegenüberliegenden Winkelbereichen des Scheibenläufers angeordnet sind, wobei in Axialrichtung der mindestens eine Scheibenläufer zwischen jeweils zwei Statoren angeordnet ist und beide Statoren identisch angeordnete Wicklungen aufweisen, welche eine identische Phasenlage des magnetischen Drehfeldes bereitstellen. Die Dichte des magnetisch im Eingriff befindlichen Materials kann bei dieser Konfiguration der Synchron-Maschine weiter gesteigert werden. Als Folge kann eine Drehmomentsteigerung um Faktor zwei bei nahezu gleicher Baugröße erreicht werden.

Eine weitere Steigerung des Drehmoments um den Faktor zwei kann dadurch erreicht werden, dass mindestens zwei als Scheibenläufer ausgebildete Rotoren mit zugeordneten Statoren in axialem Abstand voneinander auf der Drehachse vorgesehen sind.

Erstreckt sich gemäß einer weiteren Ausgestaltung der Synchron-Maschine der mindestens eine zusätzliche Permanentmagnet radialsymmetrisch zur Drehachse, optional bis zum Gehäusemantel der Synchron-Maschine, kann eine in Bezug auf Lagerbelastungen und Gleichlauf weiter optimierte Synchron-Maschine bereitgestellt werden.

Die Erfindung wird im Weiteren anhand von Ausführungsbeispielen in Verbindung mit der Zeichnung näher erläutert. In der Zeichnung zeigt

Fig. 1 ein erstes Ausführungsbeispiel eines Rotors einer erfindungsgemäßen Synchron-Maschine in einer schematischen, perspektivischen Darstellung,

Fig. 2 das Ausführungsbeispiel aus Fig. 1 in einer schematischen Schnittansicht

Fig. 3 in einer Schnittansicht einen Stator gemäß einem weiteren Ausführungsbeispiel der Erfindung,

Fig. 4 in einer perspektivischen Darstellung den Rotor eines weiteren Ausführungsbeispiels einer erfindungsgemäßen Synchron-Maschine,

Fig. 5 das Ausführungsbeispiel aus Fig. 4 in einer schematischen Schnittansicht,

Fig. 6 ein weiteres Ausführungsbeispiel einer erfindungsgemäßen Synchron-Maschine in einer Schnittansicht in der Radialebene und

Fig. 7 das Ausführungsbeispiel aus Fig. 6 in einer axialen Schnittansicht.

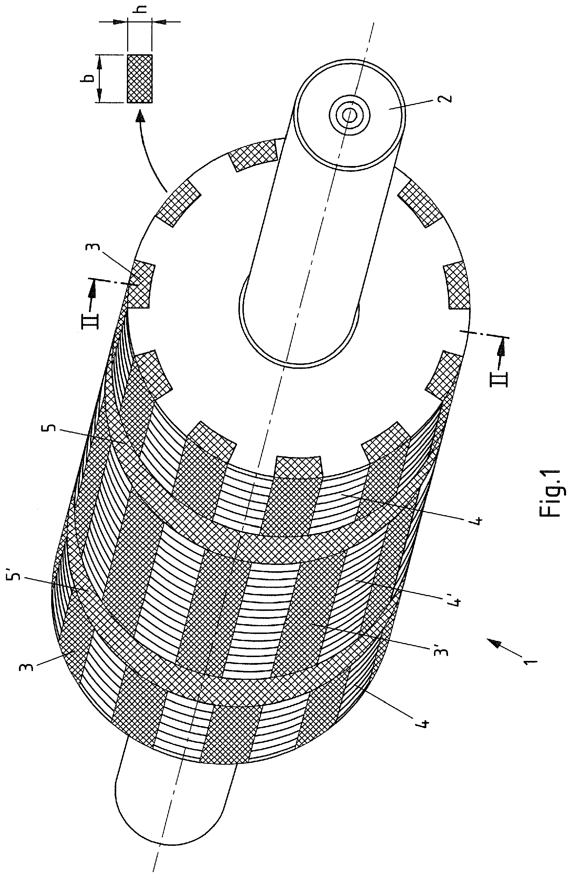

In Fig. 1 ist ein Rotor 1 in Form eines zylindrischen Läufers eines ersten Ausführungsbeispiels der erfindungsgemäßen Synchron-Maschine dargestellt. Der Rotor 1 ist auf einer Drehachse 2 angeordnet und weist Bereiche mit Permanentmagneten 3, 3' auf, die dem mindestens einen Stator, in Fig. 1 nicht dargestellt, zugewandt und in Winkelbereichen in Umfangsrichtung auf dem Rotor verteilt angeordnet sind. Zusätzlich sind auf dem Rotor 1 zwischen den Permanentmagneten 3, 3' Flussführungsbereiche 4, 4' vorgesehen, welche zur Führung des magnetischen Flusses aus dem oder in den Rotor 1 dienen. Die Flussführungsbereiche 4, 4' sind aus einem ferromagnetischen, vorzugsweise weichmagnetischen Material hergestellt. Vorzugsweise sind die Flussführungsbereiche als geblechte Zähne ausgebildet. In diesem Ausführungsbeispiel sind die Flussführungsbereiche senkrecht zur Drehachse geblecht. Der in Fig. 1 nicht dargestellte Stator weist n Nuten auf, in welchen der die mehrphasige, vorzugsweise dreiphasige Wicklung gewickelt ist. Mit der mehrphasigen Wicklung, welche eine Polzahl $2p \geq 4$ aufweist, erzeugt der Stator ein magnetisches Drehfeld mit $2p_2$ magnetischen Polen, welche in dem vorliegenden Ausführungsbeispiel in radiale Richtung weisen.

In einem bevorzugten Ausführungsbeispiel, hier ebenfalls nicht dargestellt, entspricht die Polzahl des magnetischen Drehfeldes $2p_2$ dem Zweifachen der Nutenanzahl n und Anzahl der magnetischen Pole des Rotors $2p_3$ der Differenz $2p_2 - 2p$. Hierdurch wird ein optimierter Arbeitsbereich der Synchron-Maschine erreicht, der durch Untersetzung der Bewegung des Rotors und hohe Drehmomente gekennzeichnet ist.

Erfindungsgemäß ist in dem vorliegenden Ausführungsbeispiel ein zusätzlicher Permanentmagnet 5, 5' vorgesehen. In dem in Fig. 1 dargestellten Ausführungsbeispiel ist der zusätzliche Permanentmagnet im Rotor in Form von zwei scheibenförmigen Permanentmagneten 5, 5' vorgesehen. Der magnetische Fluss der Permanentmagneten 5, 5' wird zumindest teilweise über den Rotor 1 geführt. Dies führt einem zur Magnetisierungsrichtung der Permanentmagnete 3, 3' des Rotors entgegengesetzten magnetischen Fluss in den Flussführungsbereichen 4, 4', so dass in den Flussführungsbereichen 4, 4' des Rotors 1 neben dem von den Permanentmagneten 3, 3' erzeugten magnetischen Fluss zusätzlich magnetischer Fluss geführt wird, der in den Flussführungsbereichen 4, 4' eine deutlich gesteigerte Flussdichte verursacht. Die bisher in den Flussführungsbereichen 4, 4' vorhandene Flussdichte entsprach maximal etwa der Magnetisierung der Permanentmagnete 3, 3' von 1,4 T. Mit dem zusätzlich geführten magnetischen Fluss in den Flussführungsbereichen 4, 4' kann die Flussdichte bis auf in den Sättigungsbereich des ferromagnetischen, vorzugsweise weichmagnetischen Materials der Flussführungsbereiche erhöht werden. Als Folge wird das nutzbare Drehmoment der Synchron-Maschine deutlich erhöht.

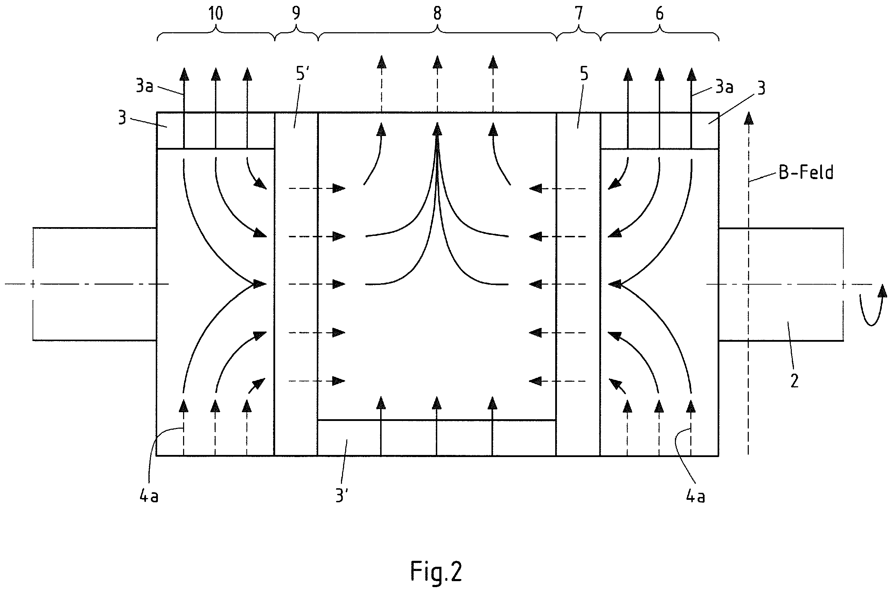

Einen Axialschnitt des Ausführungsbeispiels aus Fig. 1 entlang der Achse II-II zeigt Fig. 2. Schematisch ist hier die Drehachse 2 dargestellt sowie die zusätzlich, hier scheibenförmig ausgebildeten Permanentmagneten 5, 5'. Der Rotor 1 ist, wie auch in Fig. 1 zu erkennen ist, in fünf Axialbereiche 6, 7, 8, 9, 10 beispielsweise aufgeteilt. Der Rotor 1, welcher als zylindrische Läufer ausgeführt ist, weist, wie in Fig. 1 ebenfalls dargestellt, in vorbestimmten Winkelbereichen in Umfangsrichtung auf der Mantelfläche des Rotors angeordnete Permanentmagnete 3, 3' (3' nicht dargestellt in Fig. 2) auf, welche sich in axialer Richtung des Rotors 1 erstrecken. Die Permanentmagnete 3, 3' wie auch Flussführungsbereiche 4, 4' erstrecken sich im vorliegenden Ausführungsbeispiel vollständig über den jeweiligen Axialbereich 6, 8 oder 10.

In Fig. 2 zeigt aufgrund der Schnittansicht nur die in identischer Richtung, hier beispielsweise radial nach außen, magnetisierten Permanentmagnete 3 der Axialbereiche 6 und 10. Neben den Flusslinien ist auch die Magnetisierungsrichtung des durch den Stator erzeugten magnetischen Drehfeldes (B-Feld) dargestellt. Die Flussrichtung des magnetischen Drehfeldes sowie die in Richtung des Rotors 1 weisenden Flusslinien 4a der Flussführungsbereiche im Axialbereich 6 weisen gegen die nach radial außen gerichtete Magnetisierung der Permanentmagnete 3, welche hier mit Flusslinien 3a angedeutet ist. Im Axialbereich 6, 8 und 10 addieren sich das von außen angelegte magnetische Drehfeld und der Fluss dargestellt durch die Flusslinien 4a im Bereich der Flussführungsbereiche 4 und 4'. Im Bereich der Permanentmagnete 3, 3' dringt das äußere Magnetfeld nicht ein, so lange die Koerzitivfeldstärke der Permanentmagneten nicht überschritten wird. Hier liegt auch die Grenze der Flussdichte für das von außen angelegte magnetische Drehfeld (B-Feld).

Das von außen durch den Stator angelegte magnetische Drehfeld wird jedoch durch den zusätzlich erzeugten Fluss der Permanentmagneten 5, 5' in den Flussführungsbereichen 4, 4' verstärkt und kann in den Flussführungsbereichen Werte bis in den Sättigungsbereich des Materials der Flussführungsbereiche annehmen. Beispielsweise hier bis zu 2,4 T. Die an den Flussführungsbereichen vorhandene, hohe Flussdichte führt zu entsprechend höheren Kräften, mit welchen diese Bereiche dem magnetischen Drehfeld folgen. Als Folge führt dies zu einer deutlichen Erhöhung des Drehmoments des Motors.

Wie in Fig. 1 bzw. 2 zu erkennen ist, ist auch ein zweiter Axialbereich 8 vorgesehen, in welchem ebenfalls sich in axialer Richtung erstreckende Permanentmagnete 3' vorgesehen sind, welche radialmagnetisiert sind und in vorbestimmten Winkelbereichen in Umfangsrichtung angeordnet sind. Dazwischen erstreckten sich ebenfalls die Flussführungsbereiche 4', welche als geblechte Zähne im vorliegenden Ausführungsbeispiel ausgebildet sind. Die Permanentmagnete 3' des zweiten Axialbereichs 8 sind in entgegengesetzter Richtung zu den Permanentmagneten 3 des ersten Axialbereichs 6 magnetisiert. Hierdurch wird erreicht, dass der durch die zusätzlichen, scheibenförmigen Permanentmagnete 5, 5' erzeugte Fluss, wie Fig. 2 darstellt, aus dem Axialbereich 8 in Radialrichtung austreten kann und dennoch entgegengesetzt zur Magnetisierung der Permanentmagnete 3' der Mantelfläche gerichtet ist. Durch die jeweils entgegengesetzt gerichtete Flussrichtung zu den Permanentmagneten 3, 3' wird eine scharfe Begrenzung der Flusslinien auf die Flussführungsbereiche 4, 4' erreicht und die Flussdichte zusätzlich erhöht.

Im Ergebnis steht ein deutlich höheres Drehmoment zur Verfügung. Die Permanentmagnete 3 weisen bevorzugt eine Querschnittsform auf, deren Breite b doppelt so groß ist wie die Höhe h und erstrecken sich über den gesamten Axialbereich 6, 8, 10. Hierdurch kann ein vorteilhafter Flussverlauf des erzeugten Magnetfeldes der Permanentmagneten erreicht werden. Das Magnetfeld weist bei dieser Geometrie beispielsweise geringeren Streufluss auf.

In der zuvor dargestellten Ausführungsvariante des Rotors ist die Drehachse vorzugsweise nicht-ferromagnetisch ausgebildet, um mögliche Verluste durch Streufluss zu minimieren. Optional ist die gesamte Eintrittsfläche der Flussführungsbereiche 4 im Axialbereich 6 identisch mit der Fläche des scheibenförmigen Permanentmagneten 5, sodass eine identische Flussliniendichte durch den zusätzlich induzierten magnetischen Fluss aufgrund des Permanentmagneten 5 im Axialbereich 6 in den Flussführungsbereichen 4 erzeugt wird. Dies gilt auch für den Axialbereich 8, welcher dann in etwa doppelt so lang ausgeführt werden kann wie die Axialbereiche 6 und 10, da dieser vom magnetischen Fluss von zwei zusätzlichen Permanentmagneten 5, 5' durchflutet wird.

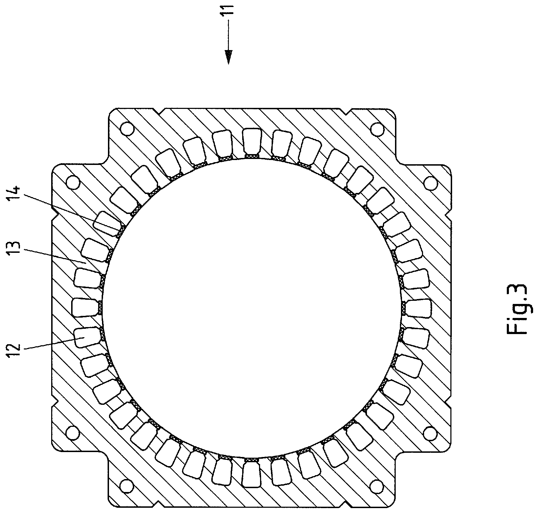

Eine in Verbindung mit dem in Fig. 1 und 2 dargestellten Ausführungsbeispiel vorteilhafte Ausgestaltung des Stators 11 ist in einer schematischen Schnittansicht in Fig. 3 dargestellt. Der aus weichmagnetischem und optional geblechtem Stahl vorzugsweise hergestellte Stator 11, weist n Nuten 12 auf, in welche die mehrphasige, vorzugsweise 3-phasige Drehstromwicklung angeordnet ist. Zwischen den Nuten sind jeweils Flussführungsbereiche 13 aus weichmagnetischem Stahl angeordnet, welche zur Führung der Flusslinien des vom Stator 11 erzeugten magnetischen Drehfeldes in den Rotor dienen. Um auch im Stator eine Konzentration der Flusslinien auf diese Flussführungsbereiche zu erhalten, sind in der in Fig. 3 dargestellten Ausführungsform zusätzlich Permanentmagnete 14 im Stator angeordnet, welche die Flusslinien des magnetischen Drehfeldes auf den Bereich der Flussführungsbereiche 13 beschränken und so zu einer Vermeidung von Streufluss beitragen.

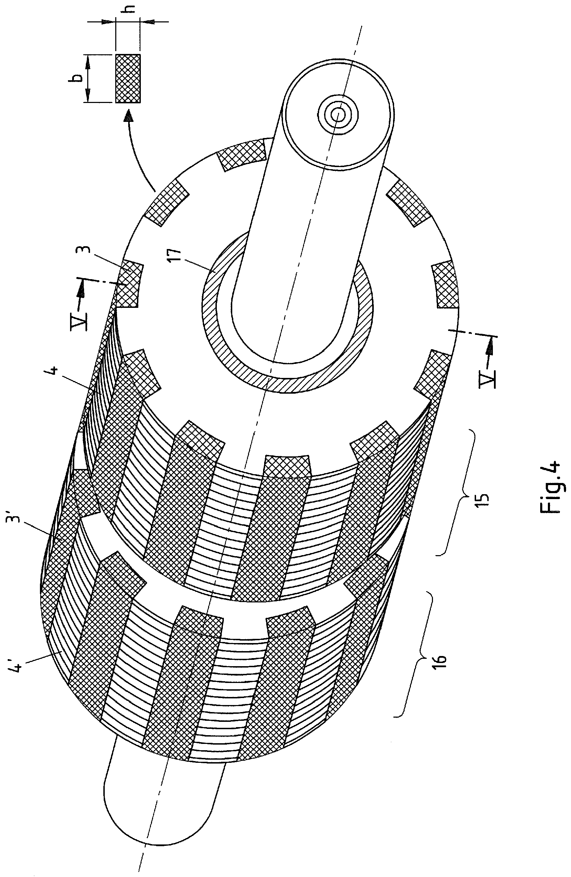

In Fig. 4 ist nun eine weitere Ausgestaltung des Rotors 1 in Form eines zylindrischen Läufers in perspektivischer, schematischer Darstellung gezeigt. In dem Ausführungsbeispiel in Fig. 4 sind zwei Axialbereiche 15, 16 vorgesehen, welche Permanentmagnete 3, 3' aufweisen, die sich in axialer Richtung erstrecken und in vorbestimmten Winkelbereichen auf der Mantelfläche des Rotors 1 angeordnet sind. Auch in dem Ausgangsbeispiel in Fig. 4 sind diese Axialbereiche derart angeordnet, dass die Permanentmagnete jeweils gegeneinander derart verdreht sind, sodass in dem Winkelbereich, in welchem im Axialbereich 15 beispielsweise ein Permanentmagnet 3, in dem Axialbereich 16 ein Flussführungsbereich 4' vorgesehen ist. Zudem ist die Magnetisierungsrichtung der Permanentmagnete 3, 3' entgegengesetzt zueinander.

Im Unterschied zu dem Ausführungsbeispiel aus Fig. 1 und 2 ist der zusätzliche Permanentmagnet 17 in dem Ausführungsbeispiel gemäß Fig. 4 und auch 5 als in radialer Richtung magnetisierter, hülsen- oder rohrförmiger Permanentmagnet 17, 18 ausgebildet. Der hülsen- oder rohrförmige Permanentmagnet 17, 18 weist einen geringeren Radius als der Rotor 1 auf und ist damit vollständig vom Blechpaket der Flussführungsbereiche 4, 4' umgeben. Die Magnetisierungsrichtung des hülsen- oder rohrförmigen Permanentmagnets 17,18 ist erfindungsgemäß entgegengesetzt zu der Magnetisierungsrichtung der Permanentmagnete des zugehörigen Axialbereichs 15, 16 ausgebildet, sodass in den Flussführungsbereichen 4 bzw. 4' jeweils zur Magnetisierungsrichtung der Permanentmagnete 3, 3' ein entgegengesetzt gerichteter magnetischer Fluss erzeugt wird. Wie bereits zuvor erläutert, kann durch diese Maßnahme eine höhere Flussdichte im Bereich der Flussführungsbereiche erzielt werden. Die Flussdichte in den Flussführungsbereichen kann bis auf 2,4 Tesla erhöht werden und damit deutlich höhere Drehmomente beim Betrieb der Synchron-Maschine mit identischen Parametern, beispielsweise Wicklungsströmen erreicht werden.

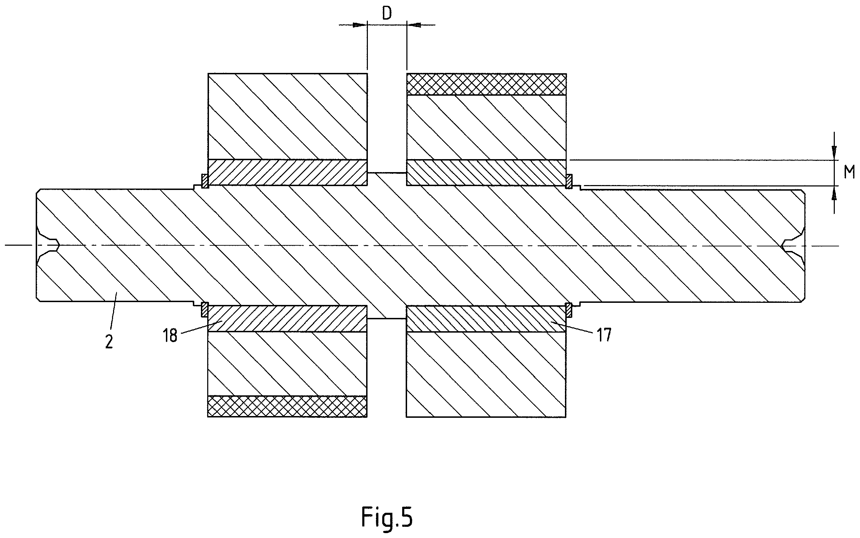

Das Ausführungsbeispiel aus Fig. 4 ist zusätzlich in Fig. 5 in einer schematischen Schnittansicht dargestellt. In dem in Fig. 5 dargestellten Ausführungsbeispiel ist der hülsen- oder rohrförmige Permanentmagnet 17, 18 unmittelbar auf die Drehachse 2 montiert. In diesem Fall sollte die Drehachse 2 aus einem ferromagnetischen Material bestehen, um auf möglichst einfache Weise einen magnetischen Schluss zu ermöglichen. Um Streufluss zu vermeiden, sollte sowohl die Dicke M des hülsen- oder rohrförmigen Permanentmagneten 17, 18, wie auch der Abstand D zwischen den beiden Axialbereichen 15, 16 das 10- bis 30-Fache, vorzugsweise das 20-Fache des Luftspaltes zwischen Rotor und Stator betragen. Hierdurch kann Streufluss reduziert werden.

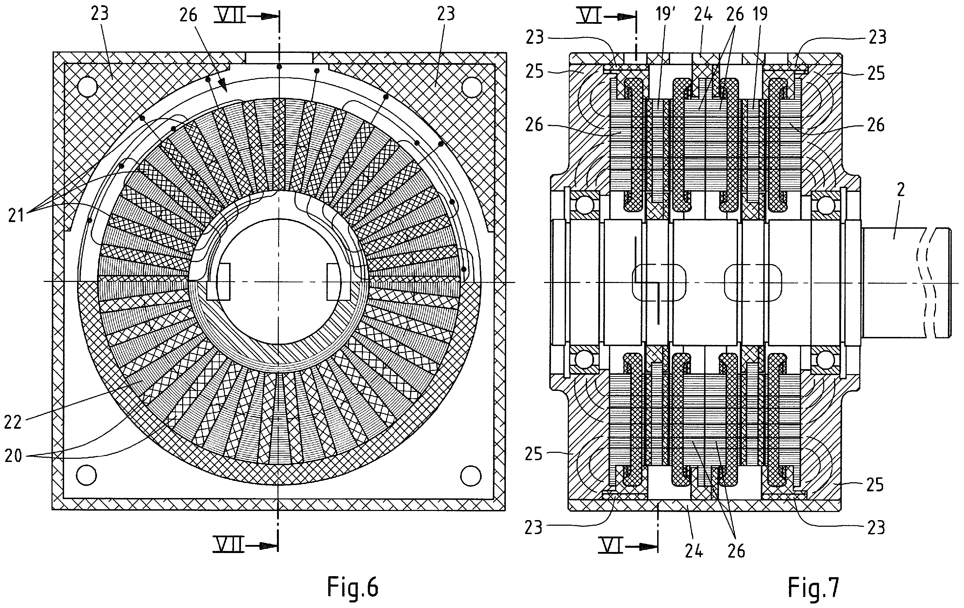

Darüber hinaus ist in den Figuren 6 und 7 eine weitere, alternative Ausgestaltung der Synchron-Maschine gemäß der vorliegenden Erfindung dargestellt. Hier ist der Rotor als Scheibenläufer 19, 19' ausgebildet und weist eine Mehrzahl an Winkelbereichen auf, in welchen Permanentmagnete 20, die sich radial nach innen erstrecken, angeordnet sind. Die Permanentmagnete 20 sind in axialer Richtung magnetisiert. Jeder Scheibenläufer 19, 19' weist in dem vorliegenden Ausführungsbeispiel auf beiden Seiten der der Rotorscheide, also in beide Axialrichtungen weisend, Permanentmagnete 20 auf.

Die im vorliegenden Ausführungsbeispiel in Fig. 6 dargestellte, dreiphasige Wicklung 21 des mindestens einen Stators 26 weist eine Wicklungsflächennormale auf, welche in axialer Richtung weist, sodass der mindestens eine Stator 26 ein magnetisches Drehfeld mit in Axialrichtung weisenden magnetischen Polen erzeugt. Zwischen den Permanentmagneten 20 des Scheibenläufers 19 sind Flussführungsbereiche 22 vorgesehen, welche ferromagnetisches, vorzugsweise weichmagnetisches Material aufweisen und insbesondere in geblechter Form ausgestaltet sind. Die Flussführungsbereiche des Scheibenläufers 19, 19' und der zugehörigen Storen 26 sind vorzugsweise in Axialrichtung geblecht.

Zusätzlich ist mindestens ein Permanentmagnet 23 vorgesehen, welcher sich vorzugsweise über das ganze Gehäuse der Synchron-Maschine erstreckt. Dieser ist in axialer Richtung magnetisiert und erzeugt zusätzlichen magnetischen Fluss im Bereich des Scheibenläufers 19, 19'. Die magnetischen Flusslinien des zusätzlichen Permanentmagneten 23 werden über Flussführungsplatten 25 aus ferro- oder weichmagnetischem Material mit möglichst wenig Streufluss in die Radialebene der Scheibenläufer 19, 19' eingekoppelt. Die Flusslinien des Permanentmagneten sind in Fig. 7 angedeutet. Der Permanentmagnet 23 ist vorzugsweise radialsymmetrisch zur Drehachse 2 ausgebildet, um eine gleichmäßige Flussdichtenerhöhung in den Flussführungsbereichen zu erzielen.

Die Drehachse 2 und ein in axialer Richtung sich erstreckender Gehäusemantel 20 sind aus nicht-ferromagnetischem Material hergestellt. Hierdurch wird erreicht, dass der durch die zusätzlichen Permanentmagnete 23 erzeugte magnetische Fluss den Scheibenläufer 19 so stark wie möglich durchflutet und nicht über die Drehachse 2 oder den Gehäusemantel 20 geschlossen wird.

Vorzugsweise sind, wie in Fig. 7 dargestellt, zwei Statoren 26 jeweils einem Scheibenläufer 19 zugeordnet, welche identische Wicklungen 21 aufweisen und eine identische Phasenlage des magnetischen Drehfeldes bereitstellen können. Hierdurch kann die Durchflutung des Scheibenläufers 19, 19' gesteigert werden und damit auch das Drehmoment der Synchron-Maschine.

Wie in Fig. 7 zu erkennen ist, sind zwei Scheibenläufer 19, 19', welche in axialem Abstand auf der Drehachse 2 angeordnet sind, auf der Drehachse angeordnet. Jedem Scheibenläufer 19, 19' sind hier jeweils zwei Statoren 26 zugeordnet.

In Fig. 6 ist der Permanentmagnet 23, welcher zusätzlich magnetischen Fluss im Scheibenläufer 19, 19' bereitstellt, dargestellt. Vorzugsweise ist der mindestens eine zusätzliche Permanentmagnet 23 radialsymmetrisch zur Drehachse ausgebildet und erstreckt sich optional bis zum Gehäusemantel 20 der Synchron-Maschine. Der Permanentmagnet 23 weist vorzugsweise eine identische Querschnittsfläche senkrecht zur Drehachse 2, wie die Flussführungsbereiche der Scheibenläufer 19, 19', auf. Über die Querschnittsflächen kann der zusätzliche magnetische Fluss, welche der Permanentmagnet 23 dem Scheibenläufer 19, 19' zur Verfügung stellt, beeinflusst werden.

Der in Fig. 6 und 7 abgebildete Synchron-Maschine besitzt aufgrund der Verwendung von zwei Scheibenläufern 19, 19' mit jeweils beidseitig angeordneten Permanentmagneten 20 und Statoren 26 eine besonders hohe Dichte an magnetisch im Eingriff befindlichen Material, sodass das Drehmoment der Synchron-Maschine um nahezu den Faktor 4 gegenüber ähnlichen Baugrößen erhöht ist.

**Patentansprüche**

1. Synchron-Maschine

   - mit mindestens einem Stator (11, 26) mit einer mehrphasigen, vorzugsweise dreiphasigen Wicklung (21) mit einer Polzahl $2p \geq 4$, wobei die Polzahl das Zweifache der Polpaarzahl p ist, die Wicklung (21) in n Nuten (12) im mindestens einen Stator angeordnet und zur Erzeugung eines magnetischen Drehfeldes ausgebildet ist,
   - mit zwischen den Nuten (12) des mindestens einen Stators vorgesehenen Flussführungsbereichen (13) zur Führung des magnetischen Drehfeldes, welche ein ferromagnetisches Material aufweisen,
   - mit mindestens einem auf einer Drehachse angeordneten Rotor (1, 19, 19'), welcher einen Luftspalt bildend relativ zu mindestens einem Stator drehbar angeordnet ist und Bereiche mit Permanentmagneten (3, 3',20) aufweist, die mindestens einem Stator (11, 26) zugewandt und in Bezug auf die Drehrichtung des Rotors gleichmäßig in Winkelbereichen in Umfangsrichtung verteilt angeordnet sind,
   - wobei die Permanentmagnete (3, 3', 20) in Richtung der Flussführungsbereiche des mindestens einen Stators (13) oder in entgegengesetzter Richtung dazu magnetisiert sind,
   - der mindestens eine Rotor (1) zwischen den Permanentmagneten (3, 3', 20) angeordnete Flussführungsbereiche (4, 4', 22) aufweist, welche zur Führung des magnetischen Flusses aus dem oder in den mindestens einen Rotor (1, 19) dienen,
   - wobei die Flussführungsbereiche (4, 4') des mindestens einen Rotors (1, 19) ein ferromagnetisches Material aufweisen,

   wobei mindestens ein zusätzlicher Permanentmagnet (5, 5', 17, 18, 23) vorgesehen ist, dessen erzeugter magnetischer Fluss zumindest teilweise über die Flussführungsbereiche (4, 4', 22) des Rotors (1) geführt wird, wobei der magnetische Fluss des zusätzlichen Permanentmagneten (5, 5', 17, 18, 23) in den Flussführungsbereichen (4, 4', 22) des Rotors eine zur Magnetisierungsrichtung der Permanentmagnete des Rotors entgegengesetzten Richtung aufweist,

   **dadurch gekennzeichnet, dass**
   die Anzahl der magnetischen Pole des Drehfeldes $2p_2$ dem Zweifachen der Nutzahl n entspricht und für die Anzahl der magnetischen Pole des mindestens einen Rotors (1) $2p_3$ gilt: $2p_3 = 2p_2 - 2p$.

2. Synchron-Maschine nach Anspruch 1,
   **dadurch gekennzeichnet, dass**
   die Wicklung (21) des mindestens einen Stators (11, 26) als Drehstromwicklung ausgebildet ist.

3. Synchron-Maschine nach Anspruch 1 oder 2,
   **dadurch gekennzeichnet, dass**
   die Flussführungsbereiche (4, 4', 13, 22) im mindestens einen Stator und/oder im Rotor geblecht ausgebildet sind.

4. Synchron-Maschine nach einem der Ansprüche 1 bis 3,
   **dadurch gekennzeichnet, dass**
   die Lochzahl q der Wicklung des Stators (11, 26) mindestens 1,5 beträgt.

5. Synchron-Maschine nach einem der Ansprüche 1 bis 4,
   **dadurch gekennzeichnet, dass**
   der mindestens eine Rotor (1) als auf einer Drehachse angeordneter zylindrischer Läufer und der mindestens eine Stator (11) zur Erzeugung eines radialen magnetischen Drehfeldes im mindestens einen Rotor (1) ausgebildet ist, wobei der mindestens eine Rotor in einem ersten Axialbereich (6, 8, 10) Permanentmagnete (3, 3') aufweist, welche in vorbestimmten Winkelbereichen auf der Mantelfläche des mindestens einen Rotors (1) vorgesehen sind und sich in axiale Richtung des mindestens einen Rotors (1) erstrecken, wobei die Permanentmagnete (3, 3') des mindestens einen Rotors (1) in Radialrichtung oder entgegengesetzt dazu magnetisiert sind, zwischen den Permanentmagneten (3, 3') des mindestens einen Rotors jeweils Flussführungsbereiche (4, 4') angeordnet sind, welche in Radialrichtung einen Luftspalt zu den Flussführungsbereichen des mindestens einen Stators (11) bilden.

6. Synchron-Maschine nach Anspruch 5,
   **dadurch gekennzeichnet, dass**
   in mindestens einem Stator (11, 26) gleichmäßig verteilte Winkelbereiche mit Permanentmagneten (14) vorgesehen sind, welche in Richtung des mindestens einen Rotors (1) oder in entgegengesetzter Richtung magnetisiert sind und welche jeweils benachbart zu den Flussführungsbereichen (13) des mindestens einen Stators (11, 26) angeordnet sind.

7. Synchron-Maschine nach Anspruch 5 oder 6,
   **dadurch gekennzeichnet, dass**
   der mindestens eine Rotor (1) mindestens zwei Axialbereiche (6, 8, 10) aufweist, wobei in mindestens einem ersten Axialbereich (6, 8, 10) sich in axialer Richtung erstreckende und in radialer Richtung oder entgegengesetzt dazu magnetisierte Permanentmagnete (3, 3') in vorbestimmten Winkelbereichen in Umfangsrichtung und zwischen den Permanentmagneten (3, 3') jeweils Flussführungsbereiche (4, 4') vorgesehen sind und in mindestens einem zweiten Axialbereich (6, 8, 10) sich in axialer Richtung erstreckende und in radialer Richtung oder entgegengesetzt dazu magnetisierte Permanentmagnete (3, 3') in vorbestimmten Winkelbereichen in Umfangsrichtung und zwischen den Permanentmagneten (3, 3') jeweils Flussführungsbereiche (4, 4') vorgesehen sind, wobei die Magnetisierungsrichtung der Permanentmagnete (3, 3') im ersten Axialbereich (6, 8, 10) entgegengesetzt zu der Magnetisierungsrichtung der im zweiten Axialbereich (6, 8, 10) angeordneten Permanentmagneten (3, 3') ist und die Permanentmagnete (3, 3') des mindestens einen zweiten Axialbereichs (6, 8, 10) in Winkelbereichen in Umfangsrichtung angeordnet sind, in welchen im ersten Axialbereich Flussführungsbereiche (4, 4') vorgesehen sind, wobei die Flussführungsbereiche der Axialbereiche des mindestens einen Rotors zum mindestens einen Stator einen Luftspalt bilden.

8.  Synchron-Maschine nach einem der Ansprüche 5 bis 7,
    **dadurch gekennzeichnet, dass**
    in mindestens einem weiteren Axialbereich (7, 9) des mindestens einen Rotors (1), welcher sich dem ersten oder zweiten Axialbereich (6, 8, 10) in Axialrichtung unmittelbar anschließt und/oder zwischen dem ersten und zweiten Axialbereich (6,8,10) mit radial magnetisierten Permanentmagneten (3, 3') angeordnet ist, mindestens ein zusätzlicher Permanentmagnet (5, 5') vorgesehen ist, welcher in Axialrichtung derart magnetisiert ist, dass ein magnetischer Fluss in den Flussführungsbereichen (4,4') des ersten und/oder zweiten Axialbereichs (6, 8, 10) des mindestens einen Rotors (1) entgegengesetzt zur Magnetisierungsrichtung der Permanentmagneten (3, 3') des jeweiligen Axialbereichs (6, 8, 10) erzeugt wird, wobei die Drehachse aus nicht-ferromagnetischem Material ausgebildet ist und der mindestens eine weitere Axialbereich (7,9) optional scheibenförmig ausgebildet ist.

9.  Synchron-Maschine einem der Ansprüche 5 bis 7,
    **dadurch gekennzeichnet, dass**
    in mindestens einem ersten und/oder zweiten Axialbereich (15, 16) des mindestens einen Rotors mindestens ein Permanentmagnet (17,18) vorgesehen ist, welcher als in radialer Richtung magnetisierte, zylindrische Hülse oder Rohr ausgebildet ist, wobei der hülsen- oder rohrförmige Permanentmagnet (17, 18) einen geringeren Außenradius als der mindestens eine Rotor (1) selbst aufweist und entgegengesetzt radial zur Magnetisierungsrichtung der auf der Mantelfläche des mindestens einen Rotors angeordneten Permanentmagneten (3, 3') magnetisiert ist, wobei optional die Drehachse (2) ferromagnetisches Material aufweist.

10. Synchron-Maschine nach Anspruch 9,
    **dadurch gekennzeichnet, dass**
    die Axialbereiche (15, 16) des Läufers durch einen Spalt (D) mit der Breite d in Axialrichtung voneinander getrennt angeordnet sind.

11. Synchron-Maschine nach Anspruch 1 bis 5,
    **dadurch gekennzeichnet, dass**
    der mindestens eine Rotor als Scheibenläufer (19, 19') ausgebildet ist und eine Mehrzahl an Winkelbereichen aufweist, in welchen Permanentmagnete (20) vorgesehen sind, wobei die Permanentmagnete (20) in axialer Richtung magnetisiert sind und sich in radialer Richtung auf der Rotorscheibe (19, 19') erstrecken, die Wicklung (21) des mindestens einen Stators eine Wicklungsflächennormale aufweist, welche in axiale Richtung weist, sodass der mindestens eine Stator (26) ein magnetisches Drehfeld mit in Axialrichtung weisenden Polen erzeugt und mindestens ein zusätzlicher Permanentmagnet (23) vorgesehen ist, welcher in axialer Richtung magnetisiert ist und magnetischen Fluss im Bereich des Scheibenläufers (19, 19') bereitstellt, wobei das magnetische Feld in die Radialebene des Scheibenläufers eingekoppelt wird, die Drehachse (2) und ein in Axialrichtung sich erstreckender Gehäusemantel (24) der Synchron-Maschine aus nicht-ferromagnetischem Material bestehen und der mindestens eine Scheibenläufer und mindestens eine Stator zwischen zwei sich in Radialrichtung erstreckende Flussführungsplatten (25) aus ferromagnetischem Material angeordnet sind, welche zur Flussführung des magnetischen Flusses des zusätzlichen Permanentmagneten vorgesehen sind,.

12. Synchron-Maschine nach Anspruch 11,
    **dadurch gekennzeichnet, dass**
    die Flussführungsbereiche des mindestens einen Stators (26) und des mindestens einen Rotors (19, 19') in Axialrichtung geblechtes, ferromagnetisches Material aufweisen.

13. Synchron-Maschine nach Anspruch 11 oder 12,
    **dadurch gekennzeichnet, dass**
    auf mindestens einem Scheibenläufer (19, 19') jeweils in entgegengesetzte Axialrichtungen weisende Permanentmagneten (20) vorgesehen sind, wobei die Magnetisierungsrichtung der Permanentmagnete (20) identisch ist und die Permanentmagnete (20) auf dem Scheibenläufer in sich in Axialrichtung jeweils gegenüberliegenden Winkelbereichen des Scheibenläufers (19, 19') angeordnet sind, wobei in Axialrichtung der mindestens eine Scheibenläufer zwischen jeweils zwei Statoren (26) angeordnet ist und beide Statoren (26) identisch angeordnete Wicklungen (21) aufweisen, welche eine identische Phasenlage des magnetischen Drehfeldes bereitstellen.

14. Synchron-Maschine nach einem Ansprüche 11 bis 13,
**dadurch gekennzeichnet, dass**
mindestens zwei als Scheibenläufer (19, 19') ausgebildete Rotoren mit zugeordneten Statoren (26) in axialem Abstand voneinander auf der Drehachse (2) vorgesehen sind.

15. Synchron-Maschine nach einem Ansprüche 11 bis 14,
**dadurch gekennzeichnet, dass**
der mindestens eine zusätzliche Permanentmagnet (23) sich radialsymmetrisch zur Drehachse (2), optional bis zum Gehäusemantel (24) der Synchron-Maschine erstreckt.

**Claims**

1. Synchronous machine

- having at least one stator (11, 26) with a polyphase, preferably three-phase winding (21) with a number of poles 2p ≥ 4, wherein the number of poles is twice the number of pole pairs p, the winding (21) is arranged in n grooves (12) in the at least one stator and designed to generate a magnetic rotating field,
- having flux guide regions (13) provided between the grooves (12) of the at least one stator (11, 26) for guiding the magnetic rotating field, which comprise a ferromagnetic material,
- having at least one rotor (1, 19, 19') arranged on an axis of rotation, which is, relative to at least one stator, rotatably arranged forming an air gap and has regions with permanent magnets (3, 3', 20) facing towards at least one stator (11, 26) and arranged evenly distributed in angular ranges in the circumferential direction with respect to the direction of rotation of the rotor,
- wherein the permanent magnets (3, 3', 20) are magnetised in the direction of the flux guide regions of the at least one stator (13) or in the opposite direction thereto,
- the at least one rotor (1) has flux guide regions (4, 4', 22) arranged between the permanent magnets (3, 3', 20), which serve to guide the magnetic flux from or into the at least one rotor (1, 19),
- wherein the flux guide regions (4, 4') of the at least one rotor (1, 19) comprise a ferromagnetic material,

wherein at least one additional permanent magnet (5, 5', 17, 18, 23) is provided, whose generated magnetic flux is at least partially guided via the flux guide regions (4, 4', 22) of the rotor (1), wherein the magnetic flux of the additional permanent magnet (5, 5', 17, 18, 23) in the flux guide regions (4, 4', 22) of the rotor has a direction opposite to the magnetisation direction of the permanent magnets of the rotor,
**characterised in that**
the number of magnetic poles of the rotating field $2p_2$ is twice the number of grooves n and the number of magnetic poles of the at least one rotor (1) $2p_3$ is:
$2p_3 = 2p_2 - 2p$.

2. Synchronous machine according to claim 1,
**characterised in that**
the winding (21) of the at least one stator (11, 26) is configured as a three-phase winding.

3. Synchronous machine according to claim 1 or 2,
**characterised in that**
the flux guide regions (4, 4', 13, 22) in the at least one stator and/or in the rotor are of a laminated design.

4. Synchronous machine according to any one of claims 1 to 3,
**characterised in that**
the number of holes q of the winding of the stator (11, 26) is at least 1.5.

5. Synchronous machine according to any one of claims 1 to 4,
**characterised in that**
the at least one rotor (1) is designed as a cylindrical armature arranged on an axis of rotation and the at least one stator (11) is designed to generate a radial magnetic rotating field in the at least one rotor (1), wherein the at least one rotor has permanent magnets (3, 3') in a first axial region (6, 8, 10) which are provided in predetermined angular ranges on the lateral surface of the at least one rotor (1) and extend in the axial direction of the at least one rotor (1), wherein the permanent magnets (3, 3') of the at least one rotor (1) are magnetised in the radial direction or opposite thereto, flux guide regions (4, 4') are respectively arranged between the permanent magnets (3, 3') of the at least one rotor, which form an air gap to the flux guide regions of the at least one stator (11) in the radial direction.

6. Synchronous machine according to claim 5,
**characterised in that**
in at least one stator (11, 26), evenly distributed angular ranges are provided with permanent magnets (14), which are magnetised in the direction of the at least one rotor (1) or in the opposite direction and which are arranged respectively adjacent to the flux guide regions (13) of the at least one stator (11, 26).

7. Synchronous machine according to claim 5 or 6, **characterised in that**
the at least one rotor (1) has at least two axial regions (6, 8, 10), wherein permanent magnets (3, 3') are provided in at least one first axial region (6, 8, 10), which extend in the axial direction and are magnetised in the radial direction or opposite thereto, in predetermined angular ranges in the circumferential direction, and between the permanent magnets (3, 3') flux guide regions (4, 4') are respectively provided and in at least one second axial region (6, 8, 10) permanent magnets (3, 3') are provided, which extend in the axial direction and are magnetised in the radial direction or opposite thereto, in predetermined angular ranges in the circumferential direction, and between the permanent magnets (3, 3') flux guide regions (4, 4') are respectively provided, wherein the magnetisation direction of the permanent magnets (3, 3') in the first axial region (6, 8, 10) is opposite to the magnetisation direction of the permanent magnets (3, 3') arranged in the second axial region (6, 8, 10) and the permanent magnets (3, 3') of the at least one second axial region (6, 8, 10) are arranged in angular ranges in the circumferential direction, in which flux guide regions (4, 4') are provided in the first axial region, wherein the flux guide regions of the axial regions of the at least one rotor form an air gap to the at least one stator.

8. Synchronous machine according to any one of claims 5 to 7, **characterised in that**
in at least one further axial region (7, 9) of the at least one rotor (1), which directly adjoins the first or second axial region (6, 8, 10) in the axial direction and/or is arranged between the first and second axial region (6, 8, 10) with radially magnetised permanent magnets (3, 3'), at least one additional permanent magnet (5, 5') is provided, which is magnetised in the axial direction such that a magnetic flux is generated in the flux guide regions (4, 4') of the first and/or second axial region (6, 8, 10) of the at least one rotor (1) opposite to the magnetisation direction of the permanent magnets (3, 3') of the respective axial region (6, 8, 10), wherein the axis of rotation consists of non-ferromagnetic material and the at least one further axial region (7, 9) is optionally disc-shaped.

9. Synchronous machine according to any one of claims 5 to 7, **characterised in that**
in at least one first and/or second axial region (15, 16) of the at least one rotor, at least one permanent magnet (17, 18) is provided, which is designed as a cylindrical sleeve or tube magnetised in the radial direction, wherein the sleeve-shaped or tubular permanent magnet (17, 18) has a smaller outer radius than the at least one rotor (1) itself and is magnetised radially opposite to the magnetisation direction of the permanent magnets (3, 3') arranged on the lateral surface of the at least one rotor, wherein the axis of rotation (2) optionally comprises ferromagnetic material.

10. Synchronous machine according to claim 9, **characterised in that**
the axial regions (15, 16) of the armature are arranged separated from each other by a gap (D) of width d in the axial direction.

11. Synchronous machine according to claim 1 to 5, **characterised in that**
the at least one rotor is designed as a disc armature (19, 19') and has a plurality of angular ranges, in which permanent magnets (20) are provided, wherein the permanent magnets (20) are magnetised in the axial direction and extend in the radial direction on the rotor disc (19, 19'), the winding (21) of the at least one stator has a winding surface normal pointing in the axial direction, so that the at least one stator (26) generates a magnetic rotating field with poles pointing in the axial direction, and at least one additional permanent magnet (23) is provided, which is magnetised in the axial direction and provides magnetic flux in the region of the disc armature (19, 19'), wherein the magnetic field is coupled into the radial plane of the disc armature, the axis of rotation (2) and a housing cover of the synchronous machine, said housing cover extending in the axial direction, comprise a non-ferromagnetic material and the at least one disc armature and at least one stator are arranged between two flux guide plates (25) extending in the radial direction and made of ferromagnetic material, which are provided for flux guidance of the magnetic flux of the additional permanent magnet.

12. Synchronous machine according to claim 11, **characterised in that**
the flux guide regions of the at least one stator (26) and of the at least one rotor (19, 19') have a ferromagnetic material laminated in the axial direction.

13. Synchronous machine according to claim 11 or 12, **characterised in that**
on at least one disc armature (19, 19') permanent magnets (20) are provided, pointing in respectively opposite axial directions, wherein the magnetisation direction of the permanent magnets (20) is identical and the permanent magnets (20) are arranged on the disc armature in respectively axially opposite angular ranges of the disc armature (19, 19'), wherein in the axial direction the at least one disc armature is arranged respectively between two stators (26) and both stators (26) have identically arranged windings (21) which provide an identical phasing of the magnetic rotating field.

14. Synchronous machine according to any one of claims 11 to 13,
**characterised in that**
at least two rotors, designed as disc armatures (19, 19'), having associated stators (26), are provided at an axial distance from each other on the axis of rotation (2).

15. Synchronous machine according to any one of claims 11 to 14,
**characterised in that**
the at least one additional permanent magnet (23) extends radially symmetrically to the axis of rotation (2), optionally up to the housing cover (24) of the synchronous machine.

**Revendications**

1. Machine synchrone

    - avec au moins un stator (11, 26) avec un enroulement (21) polyphasé, de préférence triphasé, avec un nombre de pôles 2p ≥ 4, le nombre de pôles étant le double du nombre de paires de pôles p, l'enroulement (21) étant disposé dans n rainures (12) dans le au moins un stator et étant conçu pour générer un champ magnétique rotatif,
    - avec des zones de guidage de flux (13) prévues entre les rainures (12) du au moins un stator pour le guidage du champ magnétique rotatif, qui présentent un matériau ferromagnétique,
    - avec au moins un rotor (1, 19, 19') disposé sur un axe de rotation, qui est disposé de manière à pouvoir tourner par rapport à au moins un stator en formant un entrefer et qui présente des zones avec des aimants permanents (3, 3', 20), qui sont tournées vers au moins un stator (11, 26) et qui sont réparties uniformément dans des zones angulaires dans la direction périphérique par rapport au sens de rotation du rotor,
    - où les aimants permanents (3, 3', 20) sont magnétisés en direction des zones de guidage de flux du au moins un stator (13) ou en sens inverse,
    - le au moins un rotor (1) présente des zones de guidage de flux (4, 4', 22) disposées entre les aimants permanents (3, 3', 20), qui servent à guider le flux magnétique depuis ou dans le au moins un rotor (1, 19),
    - où les zones de guidage de flux (4, 4') du au moins un rotor (1, 19) sont constituées d'un matériau ferromagnétique,

où il est prévu au moins un aimant permanent supplémentaire (5, 5', 17, 18, 23) dont le flux magnétique généré est guidé au moins partiellement sur les zones de guidage de flux (4, 4', 22) du rotor (1), le flux magnétique de l'aimant permanent supplémentaire (5, 5', 17, 18, 23) dans les zones de guidage de flux (4, 4', 22) du rotor ayant une direction opposée à la direction de magnétisation des aimants permanents du rotor,
**caractérisé en ce que**
le nombre de pôles magnétiques du champ rotatif $2p_2$ est égal au double du nombre de rainures n et pour le nombre de pôles magnétiques d'au moins un rotor (1) 2p3, on a : $2p3 = 2p_2 - 2p$.

2. Machine synchrone selon la revendication 1,
**caractérisé en ce que**
l'enroulement (21) du au moins un stator (11, 26) est réalisé sous forme d'enroulement triphasé.

3. Machine synchrone selon la revendication 1 ou 2,
**caractérisé en ce que**
les zones de guidage de flux (4, 4', 13, 22) dans le au moins un stator et/ou dans le rotor sont formées de manière feuilletée.

4. Machine synchrone selon l'une des revendications 1 à 3,
**caractérisé en ce que**
le nombre de trous q dans l'enroulement du stator (11, 26) est d'au moins 1,5.

5. Machine synchrone selon l'une des revendications 1 à 4,
**caractérisé en ce que**
le au moins un rotor (1) est réalisé sous la forme d'un rotor cylindrique disposé sur un axe de rotation et le au moins un stator (11) est réalisé pour générer un champ magnétique rotatif radial dans le au moins un rotor (1), le au moins un rotor présentant dans une première zone axiale (6, 8, 10) des aimants permanents (3, 3') qui sont prévus dans des zones angulaires prédéterminées sur l'enveloppe du boîtier du au moins un rotor (1) et s'étendent dans la direction axiale du au moins un rotor (1), où les aimants permanents (3, 3') du au moins un rotor (1) sont magnétisés dans la direction radiale ou dans la direction opposée à celle-ci, des zones de guidage de flux (4, 4') sont respectivement disposées entre les aimants permanents (3, 3') du au moins un rotor, qui forment dans la direction radiale un entrefer avec les zones de guidage de flux du au moins un stator (11).

6. Machine synchrone selon la revendication 5,
**caractérisé en ce que**

dans au moins un stator (11, 26), il est prévu des zones angulaires uniformément réparties avec des aimants permanents (14), qui sont magnétisés en direction du au moins un rotor (1) ou en sens inverse et qui sont disposés respectivement à côté des zones de guidage de flux (13) du au moins un stator (11, 26).

7. Machine synchrone selon la revendication 5 ou 6, **caractérisé en ce que**
le au moins un rotor (1) présente au moins deux zones axiales (6, 8, 10), où des aimants permanents (3, 3') s'étendant dans la direction axiale et magnétisés dans la direction radiale ou dans la direction opposée à celle-ci étant disposés dans au moins une première zone axiale (6, 8, 10) dans des zones angulaires prédéterminées dans la direction périphérique et entre les aimants permanents (3, 3') sont prévus à chaque fois des zones de guidage de flux (4, 4') et des aimants permanents (3, 3') s'étendant dans la direction axiale et magnétisés dans la direction radiale ou dans la direction opposée à celle-ci sont prévus dans au moins une deuxième zone axiale (6, 8, 10) dans des zones angulaires prédéterminées dans la direction périphérique et entre les aimants permanents (3, 3') sont prévues des zones de guidage de flux (4, 4'), la direction de magnétisation des aimants permanents (3, 3') dans la première zone axiale (6, 8, 10) étant opposée à la direction de magnétisation des aimants permanents (3, 3') disposés dans la deuxième zone axiale (6, 8, 10) et des aimants permanents (3, 3') de la au moins une deuxième zone axiale (6, 8, 10) sont disposées dans des zones angulaires dans la direction périphérique, dans lequel des zones de guidage de flux (4, 4') sont prévues dans la première zone axiale, les zones de guidage de flux des zones axiales du au moins un rotor formant un entrefer avec le au moins un stator.

8. Machine synchrone selon l'une des revendications 5 à 7, **caractérisé en ce qu'**
au moins un aimant permanent supplémentaire (5, 5') est prévu dans au moins une autre zone axiale (7, 9) du au moins un rotor (1), qui se raccorde directement à la première ou à la deuxième zone axiale (6, 8, 10) dans la direction axiale et/ou est disposé entre la première et la deuxième zone axiale (6, 8, 10) avec des aimants permanents (3, 3') magnétisés radialement, l'aimant permanent supplémentaire (5, 5') étant magnétisé dans la direction axiale de cette manière, **en ce que** dans les zones de guidage de flux (4, 4') de la première et/ou de la deuxième zone axiale (6, 8, 10) du au moins un rotor (1), un flux magnétique est produit en sens inverse de la direction de magnétisation des aimants permanents (3, 3') de la zone axiale respective (6, 8, 10), l'axe de rotation étant formé d'un matériau non ferromagnétique et l'au moins une autre zone axiale (7, 9) étant éventuellement réalisée sous la forme d'un disque.

9. Machine synchrone selon l'une des revendications 5 à 7, **caractérisé en ce qu'**
au moins un aimant permanent (17, 18) est prévu dans au moins une première et/ou une deuxième zone axiale (15, 16) du au moins un rotor, qui est réalisé sous la forme d'une douille cylindrique ou d'un tube magnétisé dans la direction radiale, l'aimant permanent (17, 18) en forme de douille ou en forme de tube a un rayon extérieur plus petit que le au moins un rotor (1) lui-même et est magnétisé dans le sens radial opposé au sens de magnétisation des aimants permanents (3, 3') disposés sur l'enveloppe du boîtier du au moins un rotor, l'axe de rotation (2) étant éventuellement en matériau ferromagnétique.

10. Machine synchrone selon la revendication 9, **caractérisé en ce que**
les zones axiales (15, 16) du rotor sont disposées séparées les unes des autres dans la direction axiale par une crevasse (D) de largeur d.

11. Machine synchrone selon les revendications 1 à 5, **caractérisé en ce que**
le au moins un rotor est réalisé sous forme de rotor à disque (19, 19') et présente plusieurs zones angulaires dans lesquelles sont prévus des aimants permanents (20), les aimants permanents (20) étant magnétisés dans la direction axiale et s'étendant dans la direction radiale sur le disque de rotor (19, 19'), l'enroulement (21) du au moins un stator présente une normale à la surface de l'enroulement orientée dans la direction axiale, de telle sorte que le au moins un stator (26) génère un champ magnétique rotatif avec des pôles orientés dans la direction axiale, et au moins un aimant permanent supplémentaire (23) est prévu, qui est magnétisé dans la direction axiale et fournit un flux magnétique dans la zone du rotor à disque (19, 19'), le champ magnétique étant couplé dans le plan radial du rotor à disque, l'axe de rotation (2) et une enveloppe de boîtier (24) de la machine synchrone s'étendant axialement sont constitués d'un matériau non ferromagnétique et le au moins un rotor à disque et le au moins un stator sont disposés entre deux tôles de guidage de flux (25) en matériau ferromagnétique s'étendant radialement, qui sont prévues pour le guidage du flux magnétique de l'aimant permanent supplémentaire.

12. Machine synchrone selon la revendication 11, **caractérisé en ce que**
les zones de guidage de flux du au moins un stator (26) et du au moins un rotor (19, 19') comprennent un matériau ferromagnétique qui est laminé dans la direction axiale.

13. Machine synchrone selon la revendication 11 ou 12, **caractérisé en ce que** des aimants permanents (20) orientés chacun dans des directions axiales opposées sont prévus sur au moins un rotor à disque (19, 19'), la direction de magnétisation des aimants permanents (20) étant identique et les aimants permanents (20) étant disposés sur le rotor à disque dans des zones angulaires du rotor à disque (19, 19') qui sont respectivement opposées dans la direction axiale, où, dans la direction axiale, le au moins un rotor à disque est disposé entre deux stators (26) respectifs et les deux stators (26) présentent des enroulements (21) disposés de manière identique, qui fournissent une position de phase identique du champ magnétique rotatif.

14. Machine synchrone selon l'une des revendications 11 à 13, **caractérisé en ce qu'** au moins deux rotors réalisés sous forme de rotors à disques (19, 19') avec des stators (26) associés sont prévus à une distance axiale l'un de l'autre sur l'axe de rotation (2).

15. Machine synchrone selon l'une des revendications 11 à 14, **caractérisé en ce que** le au moins un aimant permanent supplémentaire (23) s'étend radialement symétriquement par rapport à l'axe de rotation (2), éventuellement jusqu'à l'enveloppe du boîtier (24) de la machine synchrone.

Fig.1

Fig.2

Fig.3

Fig.4

Fig.5

Fig.7

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010019606 A1
- US 2005099082 A1
- DE 4115887 A1
- US 2010176679 A1